Europäisches Patentamt

European Patent Office

Office européen des brevets

(19)

(11) Veröffentlichungsnummer : **0 192 159**
B1

(12) # EUROPÄISCHE PATENTSCHRIFT

(45) Veröffentlichungstag der Patentschrift :
17.08.88

(51) Int. Cl.⁴ : **H 01 G  4/30**, H 01 G  1/147

(21) Anmeldenummer : **86101676.4**

(22) Anmeldetag : **10.02.86**

(54) Elektrischer Schichtkondensator und Verfahren zu seiner Herstellung.

(30) Priorität : **11.02.85 DE 3504566**

(43) Veröffentlichungstag der Anmeldung :
**27.08.86 Patentblatt 86/35**

(45) Bekanntmachung des Hinweises auf die Patenterteilung : **17.08.88 Patentblatt 88/33**

(84) Benannte Vertragsstaaten :
**AT CH DE FR GB IT LI SE**

(56) Entgegenhaltungen :
**EP-A- 0 011 033**
**EP-A- 0 097 946**
**DE-A- 2 726 324**
**DE-B- 2 416 566**
**FR-A- 1 229 790**

(73) Patentinhaber : **Siemens Aktiengesellschaft Berlin und München**
**Wittelsbacherplatz 2**
**D-8000 München 2 (DE)**

(72) Erfinder : **Behn, Reinhard, Dipl.-Phys.**
**Frasdorferstrasse 6d**
**D-8000 München 90 (DE)**
Erfinder : **Utner, Ferdinand**
**Roter Brachweg 99**
**D-8400 Regensburg (DE)**

EP 0 192 159 B1

## Beschreibung

Die Erfindung betrifft einen elektrischen Schichtkondensator, der aus einem verfestigten Stapel aus miteinander abwechselnden Kunststofflagen und Metallbelägen besteht, die regenerierfähig dünn auf die Kunststofflagen aufgetragen sind, und der Stapel an gegenüberliegenden Seitenflächen Metallschichten enthält, die die Metallbeläge gleicher Polung elektrisch miteinander verbinden und ihrerseits zum Verbinden des elektrischen Kondensators mit äußeren Stromzuführungselementen dienen können.

Elektrische Schichtkondensatoren dieser Art und Verfahren zu ihrer Herstellung sind in der einschlägigen Fachliteratur hinreichend beschrieben.

So sind in der DE-PS 892 321 Schichtkondensatoren beschrieben, die durch Übereinanderstapeln von mit Metallbelägen als Elektroden versehenen Dielektrikumslagen und Zertrennen des Stapels in Längsrichtung und quer dazu entstanden sind. Eine andere Form von Schichtkondensatoren ist durch Falten entsprechend metallisierter Bänder entstanden. Schließlich sind elektrische Schichtkondensatoren dieser Art durch Aufwickeln von Bändern mit entsprechender Anordnung der Metallbeläge auf eine Trommel und Aufteilen dieses Wickels quer zur Längsachse der Trommel und kann in radialer Richtung entstanden. Die Isolation sowohl an den Seitenflächen, an denen gleichpolige Beläge miteinander durch zusätzliche Metallschichten verbunden werden, als auch an der Trennfläche, an der sämtliche Metallbeläge vorhanden sind, geschieht dabei durch entsprechende Auswahl von metallfreien Streifen, die bei der Metallisierung der zu stapelnden oder aufzuwickelnden Bänder erzeugt werden.

Bei dem in der DE-PS 975 263 beschriebenen elektrischen Schichtkondensator werden die Isolationsflächen zwischen den unterschiedlichen Belägen an der Trennfläche unter anderem dadurch erzielt, daß an den fertiggestellten Kondensator eine genügend große Spannung angelegt wird, so daß die Beläge wegbrennen.

In der DE-PS 1 764 541 ist ein Verfahren zur Herstellung von elektrischen Schichtkondensatoren beschrieben, das sicht seit vielen Jahren in der Praxis in umfangreichem Maße bewährt hat und darin besteht, daß metallisierte Bänder entsprechend der Breite des gewünschten Kondensators auf ein Rad mit großem Durchmesser aufgewickelt werden, wodurch nach einer der Kapazität des gewünschten Kondensators entsprechenden Windungszahl ein Mutterkondensatorring entsteht, wonach eine Trennlage in wenigstens einer Windung eingewickelt wird und dann darauf der nächste Mutterkondensator, die nächste Trennlage und so fort aufgewickelt werden bis ein aus mehreren Mutterkondensatorringen bestehender Ausgangskondensator entstanden ist. Dieser Ausgangskondensator wird noch auf dem Rad an seinen beiden Stirnflächen mit Metallschichten durch das bekannte Schoop-Verfahren, bei dem Tröpfchen flüssigen Metalls mittels z. B. Preßluft auf die zu metallisierende Fläche versprüht werden (vgl. z. B. US-PS 1 128 058 oder US-PS 3 256 472), versehen. Nach entsprechenden Verfestigungschritten wird der Ausgangskondensator in die einzelnen Mutterkondensatorringe aufgeteilt. Aus diesen Mutterkondensatorringen wird durch Abtrennen ein Kondensator erhalten, der gegebenenfalls noch mit Stromzuführungsdrähten versehen, zur Ausheilung von Fehlstellen stoßregeneriert und letztlich als elektrischer Schichtkondensator fertiggestellt wird.

Das Produkt dieses Verfahrens ist in der Zeitschrift « radio mentor » 1972, Heft 1, Seiten 022 und 023 ausführlich beschrieben.

In der EP-AL-0 011 033 mit Priorität von Oktober 1978 ist das Herstellungsverfahren für einen solchen elektrischen Schichtkondensator ebenfalls ausführlich erläutert. Dort ist auch beschrieben, daß die Ränder der Bänder nicht gerade geschnitten zu sein brauchen, sondern daß entsprechende Konfigurationen gewählt werden können, wie dies ähnlich auch bereits in der DE-PS 24 16 566 dargestellt ist.

Diese Randausbildung dient dazu, die durch das Schoop-Verfahren auf die Seitenflächen aufzubringenden Metallschichten mit den Metallbelägen auf den Dielektrikumsfolien elektrisch und mechanisch besser zu verbinden. Die einfachste Art, diese elektrische Verbindung zu bewirken, wird dadurch erreicht, daß zwei metallisierte Bänder, die je an beiden Seiten gerade geschnitten sind, um einen gewissen Betrag gegeneinander versetzt aufgewickelt werden, so daß jeweils oberhalb der bis zum Rand reichenden Metallisierung ein Freiraum verbleibt, in den das Metall der Kontaktierungsmetallschicht eindringen kann.

Bei der Herstellung von Schichtkondensatoren nach dem oben beschriebenen Radwickelverfahren bietet sich diese Methode an, weil dabei die bei diesem Verfahren unbedingt notwendige exakte Führung der Folien gewährleistet ist.

In der DE-AS 22 27 751 (entsprechend der US-PS 3 855 507) ist ebenfalls ein Schichtkondensator beschrieben, bei dem beidseitig mit Metallbelägen versehene Bänder gegeneinander versetzt auf ein Rad mit großem Durchmesser gewickelt werden, wobei die Gegenfolienbeläge für eine dielektrisch wirksame Kunststoffschicht von je einem Band stammen.

Bei einem Kondensator, dessen Dielektrikum durch Glimmpolymerisation des Monomeren eines Kusntstoffes aus der Gasphase erzeugt wird, wofür zunächst auf eine Kunststoffträgerfolie ein Metallbelag aufgedampft, darauf das Dielektrikum erzeugt und darauf wiederum ein weiterer Metallbelag als Gegenelektrode aufgebracht werden (vergleiche DE-PS 23 02 174 und DE-PS 29 00 772), gewährleistet eine lediglich seitliche Versetzung gerade geschnittener Folien keine ausreichende Kontaktierung der jeweiligen gleichpoligen Beläge.

Der vorliegenden Erfindung liegt die Aufgabe zugrunde, einen elektrischen Schichtkondensator mit durch Glimmpolymerisation hergestelltem Kunststoffdielektrikum anzugeben, bei dem eine sichere Kontaktierung sämtlicher Beläge gewährleistet ist und dessen Herstellung vereinfacht möglich ist.

Zur Lösung dieser Aufgabe ist der elektrische Schichtkondensator der eingangs angegebenen Art erfindungsgemäß gekennzeichnet durch die Merkmale

a) der Stapel ist aus mehreren Einzelkondensatoren zusammengesetzt, die je aus einer Kunststoffträgerfolie, einem auf diese mit einem Freirand aufgetragenen, regenerierfähig dünnen Metallbelag als erste Elektrode, darauf einer durch Glimmpolymerisation erzeugten, einen Freirand freilassenden Kunststoffschicht als Dielektrikum, darauf mit einem Freirand aufgetragenem, regenerierfähig dünnem Metallbelag als Gegenelektrode bestehen,

b) Metallbeläge gleicher Polung sind zu gleichen Seitenflächen des Stapels geführt

c) die Einzelkondensatoren sind in Längsrichtung des Stapels auf einer Seite durch einen geraden Schnitt und auf der anderen Seite durch einen Wellenschnitt begrenzt, wobei die Einzelkondensatoren im Stapel abwechselnd angeordnet sind, so daß der gerade Schnitt jeweils mit einem Wellenschnitt zusammenfällt.

Durch die Erfindung sind sowohl eine einwandfreie Führung und damit exakte Stapelung der Einzelkondensatoren, als auch eine sichere Kontaktierung der Metallbeläge derselben gewährleistet, denn oberhalb eines jeden, randseitig zu kontaktierenden Metallbelages entsteht ein geringer Hohlraum dadurch, daß Wellenberg mit Wellental abwechseln und der Flächenbereich innerhalb eines Wellentales für die Kontaktierung ausreicht.

Vorzugsweise sind die im Stapel abwechselnd angeordneten Einzelkondensatoren gegeneinander um einen Betrag versetzt, der so bemessen ist, daß aus den Seitenflächen des Stapels die Wellenberge des Wellenschnittes herausstehen.

Durch diese seitliche Versetzung wird der zu kontaktierende Bereich noch vergrößert.

Zur weiteren Verbesserung der Kontaktsicherheit ist es vorteilhaft, wenn die Wellenberge eines Einzelkondensators gegenüber den Wellenbergen des übernächsten Einzelkondensators und die Wellenberge des anderen Einzelkondensators gegenüber den Wellenlängen des übernächsten Einzelkondensators in Längsrichtung des Stapels gegeneinander versetzt sind.

Die Wellenschnitte entsprechen vorzugsweise einer Sinuskurve, wobei vorzugsweise die Frequenz und/oder die Amplitude der Sinuskurven der Wellenschnitte von Einzelkondensator zu Einzelkondensator unterschiedlich sind.

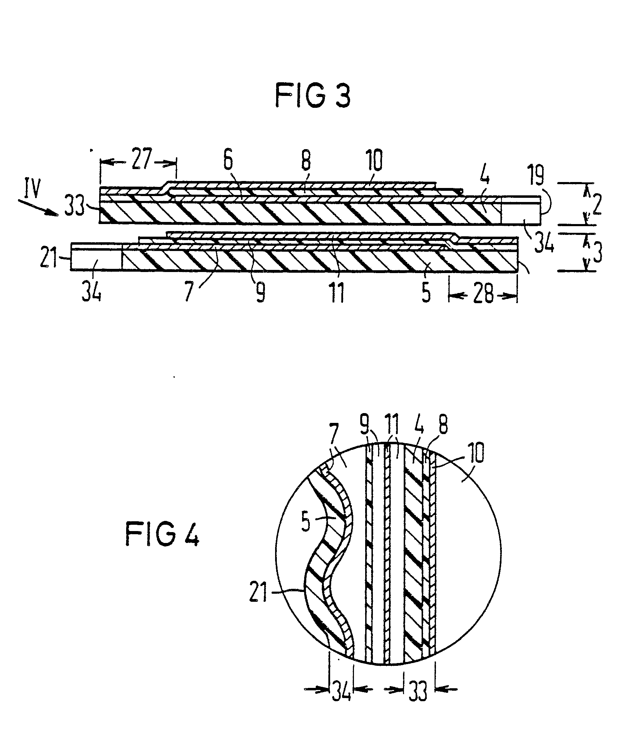

Eine für die Kontaktierung besonders günstige Ausführungsform ist gegeben, wenn jeweils die Freiränder der Metallbeläge auf den Kunststoffträgerfolien sich an dem Rand mit den geraden Schnitten befinden und daß die Metallbeläge zusammen mit den Glimmpolymerisatschichten bis zum gegenüberliegenden Rand mit den Wellenschnitten reichen (Fig. 3).

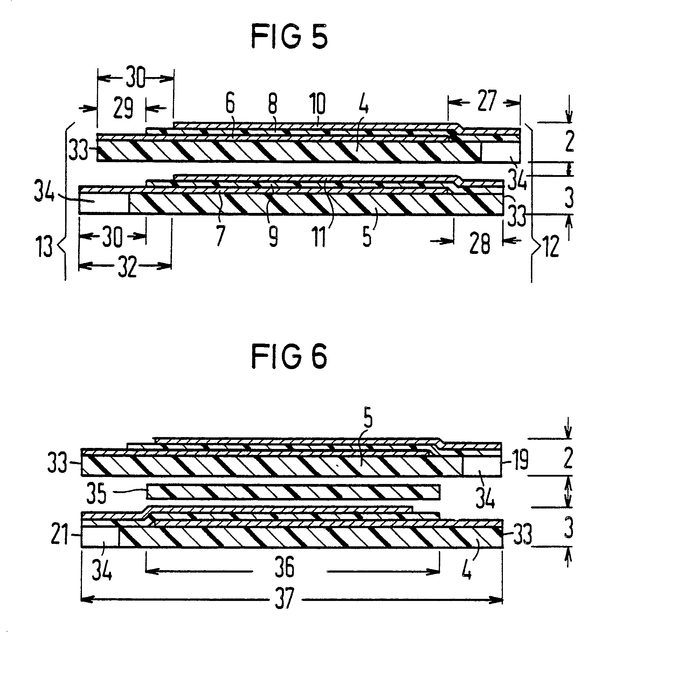

Bei einer anderen Ausführungsform sind die Freiränder der Metallbeläge auf den Kunststoffträgerfolien aller Einzelkondensatoren des Stapels stets an der gleichen Seitenfläche enthalten, wodurch die Metallbeläge stets bis zur anderen Seitenfläche reichen (Fig. 5).

Insbesondere bei einer Ausführungsform, bei der die aufzuwickelnden Folien gegeneinander nicht versetzt sind, ist es vorteilhaft, wenn im Stapel jeweils zwischen zwei Einzelkondensatoren unmetallisierte Abstandsfolien aus Kunststoff enthalten sind, deren Breite geringer als die Breite der Kunststoffträgerfolien der Einzelkondensatoren ist.

Das verfahren zur Herstellung eines elektrischen Schichtkondensators nach der Erfindung, bei dem wenigstens zwei Bänder mit entsprechender Anordnung der Metallbeläge und der Kunststoffschichten hergestellt und auf ein Rad mit großem Durchmesser gewickelt werden, ist erfindungsgemäß dadurch gekennzeichnet, daß zunächst auf als Trägerfolien dienende Bänder Metallschichten aufgedampft, dann durch Glimmpolymerisation von Kunststoff aus der Gasphase die Kunststoffschichten erzeugt und danach die Metallbeläge ebenfalls aufgedampft werden, wobei auch die jeweils erforderlichen Freiränder erzeugt werden, daß dann die Bänder mit dem geraden Schnitt und dem Wellenschnitt versehen werden, daß aus diesen Bändern durch Wickeln auf das Rad mit großem Durchmesser ein Ausgangskondensator hergestellt wird, der aus mehreren durch Trennlagen voneinander getrennten Mutterkondensatorringen besteht, daß bei diesem Wickelvorgang die Bänder an die jeweils mit dem geraden Schnitt versehenen Seite geführt werden, daß dann die beiden Stirnflächen des Ausgangskondensators mit Metallschichten durch das Metallspritzverfahren (Schoopen) versehen werden, daß der Ausgangskondensator dann in die Mutterkondensatoren aufgeteilt wird, von denen die einzelnen Stapel insbesondere durch Sägen abgetrennt werden, die dann gegebenenfalls mit Stromzuführungsdrähten versehen, stoßregeneriert und als elektrische Kondensatoren fertiggestellt werden.

Das Abtrennen der einzelnen Stapel von den Mutterkondensatorringen durch Sägen geschieht dabei vorzugsweise in der Art, wie es in der DE-PS 1 764 548 beschrieben ist, wobei bei Verwendung eines gereckten Bandes als Kunststoffträgerfolie und Aluminium als Metall für die Beläge durch die spezielle Führung des Sägevorganges Isolationszonen entstehen, die um ein Vielfaches länger sind, als es dem unmittelbaren Abstand zwischen den Belägen von Dielektrikum zu Dielektrikum entsprechend seiner Dicke entspricht, weil sich die Isolationszonen auf die Fläche der Metallbeläge erstrecken.

Als Material für die Trägerfolien eignen sich insbesondere Polyethylenterephthalat, Polycarbonat, Polyimid und ähnliche Stoffe. Die Trägerfolien haben vorzugsweise eine Dicke von 1,5 bis 5 μm.

Als Belagmetall dient vorzugsweise Aluminium.

Als aus der Gasphase durch Glimmpolymerisation herzustellender Kunststoff eignen sich insbesondere zyklische Kohlenwasserstoffe ohne Doppelbindung oder nichtzyklische Kohlenwasserstoffe mit einer Doppelbindung wie zum Beispiel einer oder mehrere der Stoffe Penten, Hexen, Hepten, Okten, Zyklopentan, Zyklohexan, Zykloheptan oder Zykloktan, sowie auch Zyklofluorbutan, wie es in der bereits erwähnten DE-PS 23 02 174 angegeben ist.

Die Dicke der als Dielektrikum wirkenden Kunststoffschichten beträgt vorzugsweise 0,1 bis 1 μm.

Die Dicke der Metallbeläge soll so bemessen sein, daß die Kondensatoren regenerierfähig sind, d. h. die Dicke liegt im Bereich von 0,015 bis 0,05 μm.

Als Metallschichten zur Kontaktierung der gleichpoligen Beläge auf gegenüberliegenden Stirnseiten des Stapels dient in erster Linie Aluminium, auf das in aller Regel eine zweite Schicht aus lötfähigem Metall, nämlich eine Aluminium-Weißmetallegierung aufgetragen wird, wie es in der schon genannten US-PS 3 256 472 beschrieben ist.

Sofern der Kunststoff der Trägerfolie und/oder des Dielektrikums selbst nicht geeignet ist, den Regeneriervorgang bei Durchschlägen zu gewährleisten oder zu fördern, kann möglichst im feldfreien Raum eine Schicht aus einem Kunststoff angeordnet sein, der den Regeneriervorgang sicherstellt, wie es in der bereits genannten DE-AS 22 27 751 erläutert ist.

Die Erfindung wird nachfolgend anhand der beigefügten Figuren näher erläutert.

Es zeigen

Fig. 1 einen Kondensator im Schnitt,

Fig. 2 schematisch und stark vergrößert übereinandergeschichtete Einzelkondensatoren gemäß Fig. 1,

Fig. 3 eine besondere Ausgestaltung für die Anordnung der Einzelkondensatoren,

Fig. 4 eine Ansicht gemäß Pfeil IV in Fig. 3,

Fig. 5 eine andere Anordnung der Einzelkondensatoren und

Fig. 6 eine Anordnung von Einzelkondensatoren unter Verwendung einer Abstandsfolie.

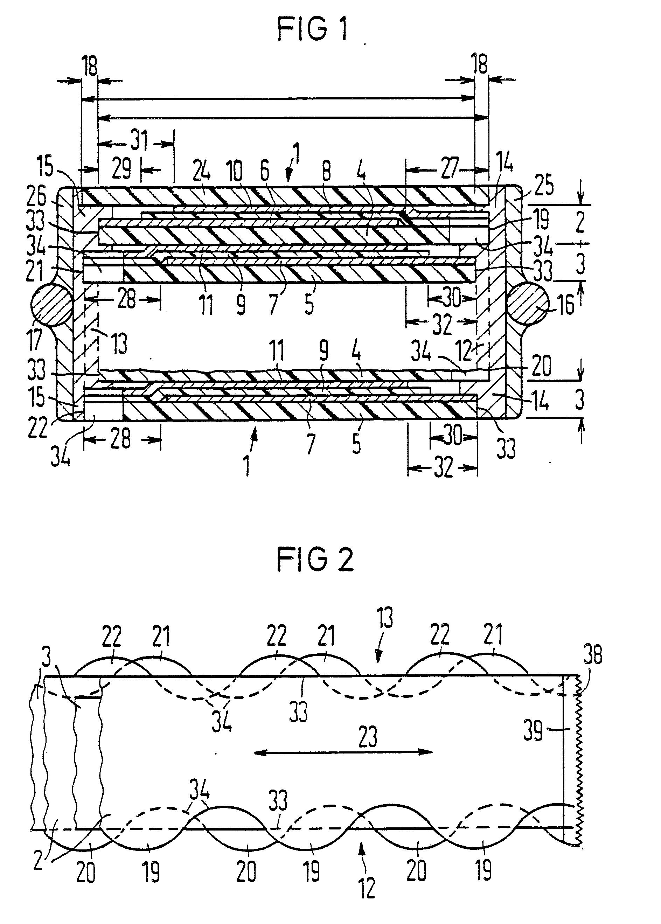

Der Kondensator gemäß Fig. 1 besteht aus einem Stapel 1, der aus einer Vielzahl (in Fig. 1 sind der Übersicht halber nur drei Einzelkondensatoren gezeigt) von Einzelkondensatoren 2 und 3 zusammengesetzt ist. Jeder Einzelkondensator 2 bzw. 3 besteht aus einer Kunststoffträgerfolie 4 bzw. 5. Auf der Kunststoffträgerfolie 4 ist eine erster Metallbelag 6 aufgetragen, der in der Fig. 1 auf der rechten Seite einen Freirand 27 bildet. Auf der Kunststoffträgerfolie 5 ist ein Metallbelag 7 aufgetragen, der in der Figur auf der linken Seite einen Freirand 28 bildet. Die Metallbeläge 6 und 7 dienen als erste Elektrode der Einzelkondensatoren 2 und 3 und bestehen vorzugsweise aus Aluminium.

Oberhalb der Metallbeläge 6 und 7 sind Glimmpolymerisatschichten 8 bzw. 9 aufgebracht, die jeweils Freiränder 29 und 30 bilden.

Als Gegenelektrode sind auf den Glimmpolymerisatschichten 8 und 9 jeweils Metallbeläge 10 und 11 aufgetragen, die wiederum Freiränder 31 und 32 bilden, wobei diese Freiränder jeweils auf der entgegengesetzten Seite zu den Freirändern 27 und 28 der Metallbeläge 6 und 7 vorhanden sind.

Auf den Seitenflächen 12 und 13 des Stapels 1 sind Metallschichten 14 und 15, vorzugsweise durch das Schoop-Verfahren, aufgebracht, und an diese Metallschichten 14 und 15 sind äußere Stromzuführungselemente 16 und 17 angelötet, insbesondere unter Verwendung weiterer, lötfähiger Metallschichten 25 und 26, insbesondere aus Weißmetallegierung.

Die Einzelkondensatoren 2 und 3 sind gegeneinander um einen Betrag 18 seitlich versetzt, so daß die Metallschichten 14 und 15 in die Seitenflächen 12 und 13 des Stapels 1 eindringen können.

In Fig. 1 ist noch gezeigt, daß der Stapel 1 zumindest an seiner Oberseite (gegebenenfalls auch an der Unterseite), durch wenigstens eine Decklage 24 nach außen isolierend abgeschlossen sein kann.

Gemäß Fig. 2 sind zwei Einzelkondensatoren 2 abwechselnd mit zwei Einzelkondensatoren 3 gezeigt. Die Einzelkondensatoren 2 weisen in Fig. 2 am oberen Rand jeweils einen geraden Schnitt 33 auf, während am unteren Rand ein Wellenschnitt 34 vorhanden ist.

Bei den Einzelkondensatoren 3 befindet sich der gerade Schnitt 33 am unteren Rand während der Wellenschnitt 34 jeweils am oberen Rand vorhanden ist. Die Wellenberge 19 und 20 der Einzelkondensatoren 2 ragen am unteren Rand der Fig. 2 über den geraden Schnitt 33 der Einzelkondensatoren 3 hinaus, während die Wellenberge 21 und 22 der Einzelkondensatoren 3 am oberen Rand der Fig. 2 über den geraden Schnitt 33 hinausragen.

Die Bezugszeichen 19, 20, 21, 22, 33 und 34 sind auch in Fig. 1 angegeben, um darzustellen, wie der gerade Schnitt 33 und der Wellenschnitt 34 zu den Wellenbergen 19 bis 22 führt, die im Kondensator in entsprechender Weise angeordnet sind.

In Fig. 2 ist weiterhin gezeigt, daß die einzelnen Wellenberge der Einzelkondensatoren 2 bzw. 3 in Längsrichtung 23 des Stapels 1 gegeneinander versetzt sind.

In Fig. 2 ist ferner durch die gezackte Linie 38 angedeutet, daß der Stapel 1 an dieser Stelle vom oben beschriebenen Mutterkondensator durch Sägen abgetrennt wurde, so daß unter Berücksichtigung der oben angegebenen Bedingungen dort eine Isolationszone 39 entsteht.

Sowohl durch die seitliche Versetzung um den Betrag 18, als auch insbesondere durch die Versetzung der Wellenberge in Längsrichtung 23 ragen die Wellenberge an den Seitenflächen 12 und 13 über den eigentlichen Rand des Kondensators hinaus und können dort auf diese Weise durch die Metallschichten 14 und 15 elektrisch und mechanisch gut erfasst werden.

Der Wellenschnitt kann vorzugsweise einer Sinuskurve entsprechen, wobei zusätzlich auch die Frequenz und/oder die Amplitude der Sinuskurven der Wellenschnitte 34 von Einzelkondensator 2 bzw. 3 zu Einzelkondensator 2 bzw. 3 unterschiedlich sind. Dies ist in der oben bereits genannten DE-PS 24 16 566 näher erläutert.

Fig. 3 zeigt eine bevorzugte Ausführungsform der Erfindung, bei der jeweils die Freiränder 27 und 28 der Metallbeläge 6 und 7 auf den Kunststoffträgerfolien 4 und 5 sich an dem Rand mit den geraden Schnitten 33 befinden und die Metallbeläge 10 bzw. 11 zusammen mit den Glimmpolymerisatschichten 8 bzw. 9 bis zum gegenüberliegenden Rand mit den Wellenschnitten 34 reichen.

Diese Ausführungsform gewährleistet eine besonders gute Kontaktierung der gleichpoligen Beläge 7 und 10 auf der einen Seite und der gleichpoligen Beläge 6 und 11 auf der anderen Seite des Kondensators, weil die Wellentäler zwischen den Wellenbergen 21 bzw. 19 den Raum oberhalb der zu kontaktierenden Beläge freihalten.

Fig. 4 zeigt vergrößert einen Ausschnitt gemäß Pfeil IV in Fig. 3, wobei die einzelnen Bezugszeichen den bereits erläuterten Bezugszeichen entsprechen.

Die Anordnung der Einzelkondensatoren 2 und 3 gemäß Fig. 5 zeigt, daß die Freiränder 27 und 28 der Metallbeläge 6 und 7 auf den Kunststoffträgerfolien 4 und 5 aller Einzelkondensatoren 2 und 3 des Stapels 1 stets an der gleichen Seitenfläche 12 enthalten sind und die Metallbeläge 6 und 7 dadurch stets bis zur anderen Seitenfläche 13 reichen. Auch hierdurch wird eine gute Kontaktierung der gleichpoligen Metallbeläge 10 und 11 an der Seitenfläche 12 sowie der Metallbeläge 6 und 7 an der Seitenfläche 13 gewährleistet.

Fig. 6 zeigt eine Anordnung der Einzelkondensatoren 2 und 3, die gegeneinander nicht versetzt zu sein brauchen, weil eine Abstandfolie 35 im feldfreien Raum vorhanden ist, deren Bereits 36 geringer ist als die Breite 37 der Kunststoffträgerfolien 4 und 5. Auf diese Weise entsteht oberhalb der miteinander zu verbindenden gleichpoligen Beläge ebenfalls ein ausreichender Freiraum für das Eindringen der Metallschichten 14 bzw. 15 (vergl. Fig. 1).

## Patentansprüche

1. Elektrischer Schichtkondensator, der aus einem verfestigten Stapel aus miteinander abwechselnden Kunststofflagen und Metallbelägen besteht, die regenerierfähig dünn auf die Kunststofflagen aufgetragen sind, und der Stapel an gegenüberliegenden Seitenflächen Metallschichten enthält, die die Metallbeläge gleicher Polung elektrisch miteinander verbinden und ihrerseits zum Verbinden des elektrischen Kondensators mit äußeren Stromzuführungselementen dienen können, gekennzeichnet durch die Merkmale

a) der Stapel (1) ist aus mehreren Einzelkondensatoren (2, 3) zusammengesetzt, die je aus einer Kunststoffträgerfolie (4, 5), einem auf diese mit einem Freirand (27, 28) aufgetragenen, regenerierfähig dünnen Metallbelag (6, 7) als erste Elektrode, darauf einer durch Glimmpolymerisation erzeugten, einen Freirand (29, 30) freilassenden Kunststoffschicht (8, 9) als Dielektrikum und darauf mit einem Freirand (31, 32) aufgetragenem, regenerierfähig dünnem Metallbelag (10, 11) als Gegenelektroden bestehen,

b) Metallbeläge (7 und 10 bzw. 6 und 11) gleicher Polung sind zu gleichen Seitenflächen (12 bzw. 13) des Stapels (1) geführt und

c) die Einzelkondensatoren (2, 3) sind in Längsrichtung (23) des Stapels (1) auf einer Seite durch einen geraden Schnitt (33) und auf der anderen Seite durch einen Wellenschnitt (34) begrenzt, wobei die Einzelkondensatoren (2, 3) im Stapel (1) abwechselnd angeordnet sind, so daß der gerade Schnitt (33) jeweils mit einem Wellenschnitt (34) zusammenfällt.

2. Elektrischer Schichtkondensator nach Anspruch 1, dadurch gekennzeichnet, daß die im Stapel (1) abwechselnd angeordneten Einzelkondensatoren (2, 3) gegeneinander um einen Betrag (18) versetzt sind, der so bemessen ist, daß aus den Seitenflächen (12, 13) die Wellenberge (19, 20, 21, 22) des Wellenschnittes (34) herausstehen.

3. Elektrischer Schichtkondensator nach Anspruch 1 oder 2, dadurch gekennzeichnet, daß die Wellenberge (19) des Einzelkondensators (2) gegenüber den Wellenbergen (20) des übernächsten Einzelkondensators (2) und die Wellenberge (21) des Einzelkondensators (3) gegenüber den Wellenbergen (22) des übernächsten Einzelkondensators (3) in Längsrichtung (23) des Stapels (1) gegeneinander versetzt sind.

4. Elektrischer Schichtkondensator nach einem der vorangehenden Ansprüche, dadurch gekennzeichnet, daß die Wellenschnitte (34) einer Sinuskurve entsprechen.

5. Elektrischer Schichtkondensator nach Anspruch 4, dadurch gekennzeichnet, daß die Frequenz und/oder die Amplitude der Sinuskurven oder Wellenschnitte (34) von Einzelkondensator (2, 3) zu Einzelkondensator (2, 3) unterschiedlich sind.

6. Elektrischer Schichtkondensator nach einem der vorangehenden Ansprüche, dadurch gekennzeichnet, daß jeweils die Freiränder (27, 28) der Metallbeläge (6, 7) auf den Kunststoffträgerfolien (4, 5) sich an dem Rand mit den geraden Schnitten (33) befinden und daß die Metallbeläge (10, 11) zusammen mit den Glimmpolymerisatschichten (8, 9) bis zum gegenüberliegenden Rand mit den Wellenschnitten (34) reichen.

7. Elektrischer Schichtkondensator nach einem der vorangehenden Ansprüche, dadurch gekennzeichnet, daß die Freiränder (27, 28) der Metallbeläge (6, 7) auf den Kunststoffträgerfolien (4, 5) aller Einzelkondensatoren (2, 3) des Stapels (1)

stets an der gleichen Seitenfläche (12) enthalten sind und die Metallbeläge (6, 7) dadurch stets bis zur anderen Seitenfläche (13) reichen.

8. Elektrischer Schichtkondensator nach einem der Ansprüche 1 bis 7, dadurch gekennzeichnet, daß im Stapel (1) jeweils zwischen zwei Einzelkondensatoren (2, 3) unmetallisierte Abstandsfolien (35) aus Kunststoff enthalten sind, deren Breite (36) geringer als die Breite (37) der Kunststoffträgerfolien (4, 5) der Einzelkondensatoren (2, 3) ist.

9. Verfahren zur Herstellung eines elektrischen Schichtkondensators nach einem der vorangehenden Ansprüche, bei dem wenigstens zwei Bänder mit entsprechender Anordnung der Metallbeläge und der Kunststoffschichten hergestellt und auf ein Rad mit großem Durchmesser gewickelt werden, dadurch gekennzeichnet, daß zunächst auf als Trägerfolien (4, 5) dienende Bänder Metallschichten (6, 7) aufgedampft, dann durch Glimmpolymerisation von Kunststoff aus der Gasphase die Kunststoffschichten (8, 9) erzeugt und danach die Metallbeläge (10, 11) ebenfalls aufgedampft werden, wobei auch die jeweils erforderlichen Freiränder (27, 28, 29, 30, 31, 32) erzeugt werden, daß dann die Bänder mit dem geraden Schnitt (33) und dem Wellenschnitt (34) versehen werden, daß aus diesen Bändern durch Wickeln auf das Rad mit großem Durchmesser ein Ausgangskondensator hergestellt wird, der aus mehreren durch Trennlagen voneinander getrennten Mutterkondensatorringen besteht, daß bei diesem Wickelvorgang die Bänder an der jeweils mit dem geraden Schnitt (33) versehene Seite geführt werden, daß dann die beiden Stirnflächen des Ausgangskondensators mit Metallschichten durch Metallspritzverfahren (Schoopen) versehen werden, daß der Ausgangskondensator dann in die Mutterkondensatorringe aufgeteilt wird, von denen die einzelnen Stapel (1) insbesondere durch Sägen abgetrennt werden, die dann gegebenenfalls mit Stromzuführungsdrähten versehen, stoßregeneriert und als elektrische Kondensatoren fertiggestellt werden.

**Claims**

1. An electrical stacked capacitor which consists of a consolidated stack of alternating synthetic resin layers and metal coatings which are applied to the synthetic resin layers so as to be regenerably thin, and the stack includes, at opposite side faces, metal layers which electrically connect the metal coatings with the same polarity and can themselves serve to connect the electrical capacitor to external current supply elements, characterised by the following features :

a) the stack (1) is composed of a plurality of individual capacitors (2, 3) which each consist of a synthetic resin carrier film (4, 5), a regenerably thin metal coating (6, 7) applied thereon with a free edge (27, 28), as a first electrode, a synthetic resin layer (8, 9), produced by glow polymerisation and which leaves exposed a free edge (29, 30) applied thereon as dielectric, and a regenerably thin metal coating (10, 11) which leaves a free edge (31, 32) applied thereon as counter electrode,

b) metal coatings (7, 10 and 6, 11) of the same polarity extend to the same side faces (12 and 13) of the stack (1) and

c) in the longitudinal direction (23) of the stack (1) the individual capacitors (2, 3) are delimited on one side by a straight cut (33) and on the other side by an undulating cut (34), the individual capacitors (2, 3) in the stack (1) being arranged alternately so that the straight cut (33) in each case coincides with an undulating cut (34).

2. An electrical stacked capacitor as claimed in Claim 1, characterised in that the individual capacitors (2, 3) which are arranged alternately in the stack (1) are mutually offset by an amount (18) such that the crests (19, 20, 21, 22) on the undulating cut (34) project from the side faces (12, 13).

3. An electrical stacked capacitor as claimed in Claim 1 or 2, characterised in that the crests (19) of an indivdual capacitor (2) are offset relative to the crests (20) of the next but one individual capacitor (2), and the crests (21) of an individual capacitor (3) are offset relative to the crests (22) of the next but one individual capacitor (3), considered in the longitudinal direction (23) of the stack (1).

4. An electrical stacked capacitor as claimed in one of preceding Claims, characterised in that the undulating cuts (34) correspond to a sinusoidal curve.

5. An electrical stacked capacitor as claimed in Claim 4, characterised in that the frequency and/or the amplitude of the sinusoidal curves of the undulating cuts (34) differ from individual capacitor (2, 3) to individual capacitor (2, 3).

6. An electrical stacked capacitor as claimed in one of the preceding Claims, characterised in that the respective free edges (27, 28) of the metal coatings (6, 7) on the synthetic resin carrier films (4, 5) are located at the edge with the straight cuts (33) and that the metal coatings (10, 11), together with the glow polymerisate layer (8, 9), extend to the opposite edge with the undulating cuts (34).

7. An electrical stacked capacitor as claimed in one of the preceding Claims, characterised in that the free edges (27, 38) of the metal coatings (6, 7) on the synthetic resin carrier films (4, 5) of all the individual capacitors (2, 3) of the stack (1) are always located on the same side face (12) and the metal coatings (6, 7) thus always extend to the other side face (13).

8. An electrical stacked capacitor as claimed in one of Claims 1 to 7, characterised in that in the stack (1), between two respective individual capacitors (2, 3), unmetallised synthetic resin spacer films (35) are provided, the breadth (36) of which is smaller than the breadth (37) of the synthetic resin carrier films (4, 5) of the individual capacitors (2, 3).

9. A process for the production of an electrical stacked capacitor as claimed in one of the preceding Claims, in which at least two ribbons with an appropriate arrangement of the metal coatings and the synthetic resin layers are produced and wound on a wheel with a large diameter, characterised in that metal layers (6, 7) are first vapour deposited on to ribbons which serve as carrier films (4, 5), whereupon the synthetic resin layers (8, 9) are produced by glow polymerisation of synthetic resin from the gas phase, whereupon the metal coatings (10, 11) are likewise vapour deposited, the respective required free edges (27, 28, 29, 30, 31, 32) also being formed, that then the ribbons are provided with the straight cut (33) and the undulating cut (34), that these ribbons are wound on to the large diameter wheel to form a starting capacitor with consists of a plurality of parent capacitor rings separated from one another by separating layers, that during this winding process the ribbons are guided at the respective side provided with the straight cut (33), that the two end faces of the starting capacitor are then provided with metal layers by metal spraying (Schoop method), that the starting capacitor is then divided up into the parent capacitor rings from which, in particular by sawing, the individual stacks (1) are separated which are then provided where appropriate with current supply leads, are surge-regenerated and are finished as electric capacitors.

**Revendications**

1. Condensateur électrique à couches, constitué par un empilage consolidé de couches en matière plastique et des armatures métalliques, qui alternent entre elles, les armatures métalliques étant disposées sous la forme d'une pellicule mince, de manière à être régénérables, sur les couches en matière plastique, et dans lequel l'empilage comporte, sur des faces latérales opposées, des couches métalliques qui relient électriquement entre elles les armatures métalliques de même polarité et peuvent servir, pour leur part, à relier le condensateur électrique à des éléments extérieurs d'alimentation en courant, remarquable par les caractéristiques

a) l'empilage (1) est constitué par plusieurs condensateurs individuels (2, 3), qui sont constitués chacun par une feuille de support en matière plastique (4, 5), par une armature métallique mince régénérable (6, 7), disposée sur cette armature en laissant subsister un dégagement marginal (27, 28) et constituant une première électrode, par une couche en matière plastique (8, 9) formée sur l'armature métallique au moyen d'une polymérisation produite par effluve électrique, et libérant un dégagement marginal (29, 30) et utilisée en tant que diélectrique, et par une armature métallique mince régénérable (10, 11), déposée sur ce diélectrique de manière à présenter un dégagement marginal (31, 32) et constituant une contre-électrode,

b) les armatures métalliques (7 et 10 ou 6 et 11) de même polarité s'étendant sur des surfaces latérales identiques (12 ou 13) de l'empilage (1), et

c) les condensateurs individuels (2, 3) sont limités dans la direction longitudinale (23) de l'empilage (1), d'un côté, par une arête de coupe rectiligne (33) et, de l'autre côté, par une arête de coupe ondulée (34), les condensateurs individuels (2, 3) étant disposés en alternance dans l'empilage (1) de telle sorte que l'arête de coupe rectiligne (33) se situe respectivement au niveau d'une arête de coupe ondulée (34).

2. Condensateur électrique à couches suivant la revendication 1, caractérisé par le fait que les condensateurs individuels (2, 3) disposés de façon alternée dans l'empilage (1) sont décalés les uns par rapport aux autres d'une distance (18) dimensionnée de manière que les sommets (19, 20, 21, 22) de l'arête de coupe ondulée (34) fassent saillie hors des surfaces latérales (12, 13).

3. Condensateur électrique à couches suivant la revendication 1 ou 2, caractérisé par le fait que les sommets (19) de l'arête de coupe du condensateur individuel (2) sont décalés par rapport aux sommets (20) de l'arête de coupe du condensateur individuel (2) suivant en second et que les sommets (21) de l'arête de coupe du condensateur individuel (3) sont décalés par rapport aux sommets (22) de l'arête de coupe du condensateur individuel (3) suivant en second dans la direction longitudinale (23) de l'empilage (1).

4. Condensateur électrique à couches suivant l'une des revendications précédentes, caractérisé par le fait que les arêtes de coupe ondulées (34) correspondent à une courbe sinusoïdale.

5. Condensateur électrique à couches suivant la revendication 4, caractérisé par le fait que la fréquence et/ou l'amplitude des courbes sinusoïdales des arêtes de coupe ondulées (34) sont différentes d'un condensateur individuel (2, 3) au suivant.

6. Condensateur électrique à couches suivant l'une des revendications précédentes, caractérisé par le fait que les dégagements marginaux (27, 28) des armatures métalliques (6, 7) situés sur les feuilles de support en matière plastique (4, 5) sont situés au niveau du bord comportant l'arête de coupe rectiligne (33) et que les armatures métalliques (10, 11) s'étendent, conjointement avec les couches (8, 9) en polymère formé par polymérisation par effluve électrique, jusqu'au bord opposé comportant l'arête de coupe ondulée (34).

7. Condensateur électrique suivant l'une des revendications précédentes, caractérisé par le fait que les dégagements marginaux (27, 28) des armatures métalliques (6, 7) situés sur les feuilles de support en matière plastique (4, 5) de tous les condensateurs individuels (2, 3) de l'empilage (1) sont toujours situés sur la même surface latérale (12) et que les armatures métalliques (6, 7) s'étendent de ce fait toujours jusqu'à l'autre surface latérale (13).

8. Condensateur électrique à couches suivant l'une des revendications 1 à 7, caractérisé par le fait que dans l'empilage (1), entre deux condensateurs individuels respectifs (2, 3) se trouvent disposées des feuilles entretoises non métallisées (35), réalisées en matière plastique et dont la largeur (36) est inférieure à la largeur (37) des feuilles en matière plastique (4, 5) des condensateurs individuels (2, 3).

9. Procédé pour fabriquer un condensateur électrique à couches suivant l'une des revendications précédentes, selon lequel on fabrique au moins deux bandes comportant un agencement correspondant des armatures métalliques et des feuilles en matière plastique et on l'enroule sur une roue de grand diamètre, caractérisé par le fait qu'on dépose tout d'abord par évaporation des couches métalliques (6, 7) sur des bandes utilisées en tant que feuilles de support (4, 5), qu'on forme ensuite les couches en matière plastique (8, 9) par polymérisation par effluve électrique de la matière plastique à partir de la phase gazeuse et qu'on dépose également ultérieurement par évaporation les armatures métalliques (10, 11), en formant également les dégagements marginaux respectivement nécessaires (27, 28, 29, 30, 31, 32), qu'on forme ensuite dans les bandes l'arête de coupe rectiligne (33) et l'arête de coupe ondulée (34), on réalise, à partir de ces bandes et par enroulement sur la roue de grand diamètre, un condensateur initial qui est constitué par plusieurs anneaux de condensateurs mères, séparées les unes des autres par des couches de séparation, que lors de cette opération d'enroulement, on guide les bandes sur le côté muni respectivement de l'arête de coupe rectiligne (33), qu'on dépose ensuite des couches métalliques au moyen d'un procédé de métallisation par projection (schoopage) sur les deux surfaces frontales du condensateur initial, qu'on subdivise alors ce condensateur initial de manière à former les anneaux de condensateurs mères, à partir desquels on sépare, notamment par sciage, les empilages individuels (1), auxquels on raccorde éventuellement ensuite des fils d'alimentation en courant, et qu'on régénère au moyen d'impulsions et dont on achève la fabrication pour obtenir des condensateurs électriques.

# FIG 1

# FIG 2

1

# FIG 3

# FIG 4

## FIG 5

## FIG 6